# EUROPÄISCHE PATENTSCHRIFT

(11) **EP 1 078 797 B1**
(45) Veröffentlichungstag und Bekanntmachung des Hinweises auf die Patenterteilung: **03.10.2007**
(21) Anmeldenummer: 00117795.5
(22) Anmeldetag: 18.08.2000
(51) Int. Cl.: B60J 7/12, B60J 7/04, B60J 7/14

(54) **Fahrzeug-Cabriostruktur mit abnehmbaren Seitenholmen**
Convertible vehicle structure with removable side beams
Structure de voiture cabriolet avec longerons de toît amovibles

(30) Priorität: 21.08.1999 DE 19939724
(43) Veröffentlichungstag der Anmeldung: 28.02.2001
(73) Patentinhaber: Webasto AG, 82131 Stockdorf (DE)
(72) Erfinder: Miklosi, Stefan, 81247 München (DE); Reinsch, Burkhard, 87600 Kaufbeuren (DE)
(74) Vertreter: Wiese, Gerhard

(56) Entgegenhaltungen:
- DE-A- 3 721 895
- DE-A- 19 616 118
- DE-C- 19 804 990
- US-A- 5 484 185

## Beschreibung

Die vorliegende Erfindung bezieht sich auf eine Fahrzeug-Dachstruktur mit wenigstens einem Dachteil, das im Bereich von Seitenholmen verschiebbar geführt ist.

Im Zusammenhang mit einer derartigen Fahrzeug-Dachstruktur an einem Cabriolet ist es bekannt, die Seitenholme klappbar an den B-Säulen anzulenken. Diese Lösung bietet wenig Komfort für den Nutzer und ist darüber hinaus nur aufwendig und teuer realisierbar. Außerdem ist es bei einer Fahrzeug-Cabriodachstruktur mit einem festen Dach bekannt, die Seitenholme mit diesem festen Dach zu integrieren, welches insgesamt manuell von der übrigen Karosserie abnehmbar gestaltet ist (Vgl. DE-Z: ATZ 96 (1194) 4, S. 254 ff. bzw. DE 42 03 229C2). Eine weitere Lösung mit klappbar aneinander gelagerten, in Längsrichtung geteilten Seitenholmen ist aus der gattungsgemäßen DE 198 04 990 C1 bekannt. Aus der DE 37 21 895 A1 ist ein bewegbares Dachteil bekannt, das an an einem hinteren Dachteil befestigten teleskopischen Führungen verschiebbar gelagert ist.

Angesichts dieses Standes der Technik liegt der vorliegenden Erfindung die Aufgabe zugrunde, eine Fahrzeug-Cabriodachstruktur der eingangs genannten Art bezüglich der Handhabung der Seitenholme zu verbessern.

Gelöst wird diese Aufgabe durch die Merkmale des Anspruchs 1. Vorteilhafte Weiterbildungen der Erfindung sind in den Unteransprüchen angegeben.

Demnach sieht die Erfindung mit anderen Worten eine getrennte Ausbildung der Seitenholme von der übrigen Cabriodachstruktur und ihre Abnehmbarkeit und Wiedermontierbarkeit an den A- und B-Säulen der Fahrzeugkarosserie vor, wobei der Montagevorgang für die Seitenholme mittels eines Steck-/Arretiermechanismus bequem durchführbar ist. Außerdem hat die erfindungsgemäße Lösung den Vorteil, daß die aus dem Bereich des Dachs entfernten Seitenholme, ohne die Optik des Fahrzeugs zu stören, ohne weiteres, beispielsweise im Kofferraum verstaut werden können.

Um das Montieren und Demontieren der Seitenholme auch dann problemlos zu gewährleisten, wenn die Fahrzeugkarosserie Verwindungskräften ausgesetzt ist, beispielsweise beim Parken mit einem oder zwei Rädern auf dem Gehsteig, ist vorgesehen, den Steck-/Arretierungsmechanismus so zu gestalten, daß die montierten Seitenholme gegenüber der Fahrzeugkarosserie "weich" aufgehängt sind. Diese weiche Aufhängung, die auch als schwimmende Lagerung der Seitenholme ohne Einleitung von Biegemomenten in die Seitenholme bezeichnet werden kann, sieht demnach eine begrenzte Beweglichkeit der Seitenholme bis auf ein Verdrehen derselben vor. Die Stecklagerung der Seitenholme und ihre Arretierung sind dabei so getroffen, daß trotz weicher bzw. schwimmender Lagerung der Seitenholme diese in der Montagestellung an der Karosserie fixiert sind.

Als Steck-/Arretiermechanismus für die abnehmbaren Seitenholme kommt eine Vielzahl von Mechanismen in Betracht. Eine vorteilhafte Ausgestaltung dieses Mechanismus sieht erfindungsgemäß vor, daß die Stecklagerung an einem Ende der Seitenholm angeordnet ist, während die Rastarretierung am anderen Ende der Seitenholme ausgebildet ist. Diese getrennte Stecklagerung und Rastarretierung erlauben die Realisierung eines axialen Spiels für die Seitenholme, um die vorstehend angesprochene schwimmende Lagerung derselben zu gewährleisten.

Im Umfang der auf die Enden der Seitenholme verteilten Steck- und Arretierfunktionen ist vorteilhafterweise vorgesehen, daß das jeweilige Stecklager eine in bezug auf die Seitenholm-Längsachse drehfeste Aufnahme des einen Seitenholmendes bildet und bei gelöster Rastarretierung des anderen Seitenholmendes zur Montage und Demontage des Seitenholms eine Verschwenkung des Seitenholms quer zur Seitenholm-Längsachse zuläßt. Dabei ist es grundsätzlich unerheblich, welches der Lagerbestandteile an der A-Säule und welches an der B-Säule der Fahrzeugkarosserie angeordnet ist.

Für die Ausbildung des Stecklagers kommen zahlreiche Varianten in Betracht. Erfindungsgemäß bevorzugt ist für das Stecklager eine Kugelkopfverbindung zwischen der jeweiligen Säule und dem Seitenholmende und eine Dreharretierung der Kugelkopfverbindung in bezug auf die Seitenholm-Längsachse. Diese Dreharretierung kann beispielsweise in Gestalt eines in eine Vertiefung eingreifenden Zapfens gebildet sein. Bei dieser Stecklagerausführungsform wird das für die schwimmende Aufhängung der Seitenholme benötigte Spiel durch das Lager am anderen Holmende bereitgestellt.

Alternativ zu der vorstehend genannten Stecklagerausbildung kann das Stecklager eine Schwenkverbindung mit einer Schwenkachse quer zum Seitenholm und einer diese mit Spiel übergreifende Klaue aufweisen, die bevorzugt unter Federkraft gegen die Schwenkachse gedrückt ist.

Jede dieser Schwenklagerausbildungen gestattet es, den Seitenholm dadurch von der Fahrzeugkarosserie zu lösen, daß der Arretiermechanismus an dem einen Ende gelöst und der Seitenholm um das Stecklager am anderen Ende quer zur Längserstreckung des Seitenholms verschwenkt und aus dem Stecklager herausgenommen wird. Die Montage gestaltet sich mit umgekehrten Ablauf der vorstehend erläuterten Schritte.

Die Rastarretierung an dem dem Stecklager gegenüberliegenden Ende des Seitenholms umfaßt bevorzugt ein Rastglied und ein dieses lösbar festsetzendes Arretierglied. Dabei ist es von der Funktion her unerheblich, ob das Rastglied oder das Arretierglied am Seitenholm bzw. an der jeweiligen Karosseriesäule angeordnet ist.

Gemäß einer bevorzugten Ausführungsform weist das Rastglied eine in Längsrichtung des Seitenholms verschiebbar gelagerte Kugelkopfverbindung auf, die eine problemlose Einrastung bzw. Entrastung aufgrund der Schiebelagerung erlaubt. Alternativ hierzu kann das Rastglied einen Bolzen aufweisen, der eine Zentrieröffnung in einem das Arretierglied bildenden Schloßteil unter Spiel und Federvorspannung hintergreift. Vorteilhafterweise ist dabei das Schloßteil Bestandteil eines unter Federvorspannung in Verriegelungsstellung vorgespannten und in Bolzen-Freigabestellung entgegen der Federvorspannung verschiebbaren Arretier-Sperrschiebers. Hierdurch wird erreicht, daß unter Gewährleistung der schwimmenden Lagerung des Seitenholms an diesem Seitenholmende die Seitenholmarretierung ohne Bedienelemente im Innenraum des Fahrzeugs betätigbar ist.

Nachfolgend wird die Erfindung anhand der Zeichnung beispielhaft näher erläutert; es zeigen:
- Fig. 1: eine schematische perspektivische Ansicht eines Fahrzeugs mit abnehmbaren Seitenholmen,
- Fig. 2: schematisch das Stecklager an einem Ende eines Seitenholms einer Cabriodachstruktur zur Festlegung dieses Seitenholms an der A-Säule eines Fahrzeugs gemäß einer Ausführungsform der Erfindung,
- Fig. 3: eine zweite Ausführungsform der erfindungsgemäßen Stecklagerung eines Seitenholms einer Fahrzeug-Cabriostruktur an der A-Säule eines Fahrzeugs,
- Fig. 4: eine erste Ausführungsform einer erfindungsgemäßen Rastarretierung eines Seitenholms einer Fahrzeug-Cabriostruktur an der B-Säule eines Fahrzeugs, und
- Fig. 5: eine zweite Ausführungsform einer erfindungsgemäßen Rastarretierung eines Seitenholms einer Fahrzeug-Cabriostruktur an der B-Säule eines Fahrzeugs.

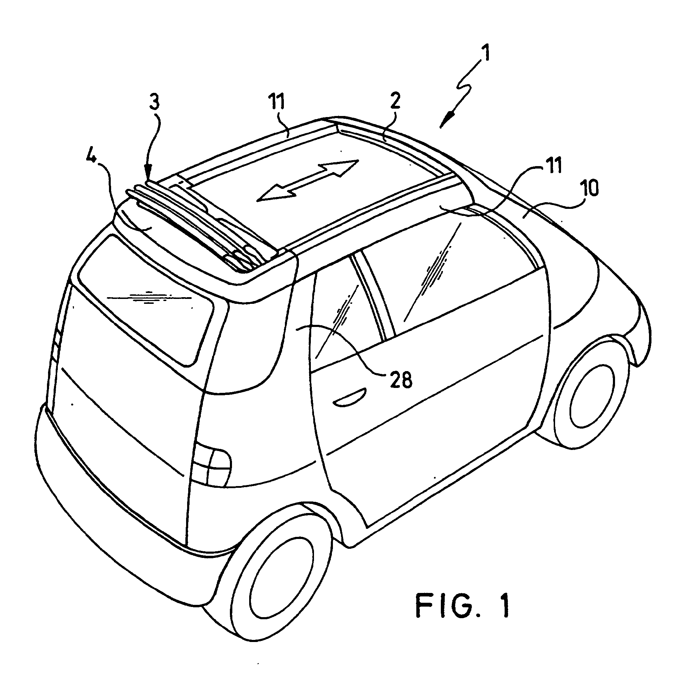

Ein in Fig. 1 dargestelltes Fahrzeug 1 weist oben an die Windschutzscheibe angrenzend einen vorderen Querholm in Form eines Windlaufs 2, vordere, die Windschutzscheibe seitlich begrenzende A-Säulen 10 und hintere, sich an die Seitentüren anschließende B-Säulen 28 auf, die zu beiden Seiten jeweils durch einen Seitenholm 11 verbunden sind. Zwischen den Seitenholmen 11 ist ein im Ausführungsbeispiel als Faltdach ausgebildetes öffnungsfähiges Dachteil 3 verschiebbar geführt. In der vollständigen Öffnungsposition ist dieses öffnungsfähige Dachteil in eine hintenliegende Dachkasette 4 einfahrbar und dort arretierbar, so daß nachfolgend die Seitenholme 11 von der A-Säule 10 und der B-Säule 28 lösbar sind. Das Fahrzeug 1 weist nach Entfernen der Seitenholme 11 eine große, Targaartige Dachöffnung auf. In weiterer Ausgestaltung, die jedoch nicht Gegenstand der vorliegenden Erfindung ist, ist auch die Dachkasette 4 mit dem darin aufgenommenen öffnungsfähigen Dachteil 3 durch Verschwenken in einen hinteren Stauraum ablegbar, wodurch sich die Dachöffnung zu einer großen Cabrio-artigen Dachöffnung erweitert.

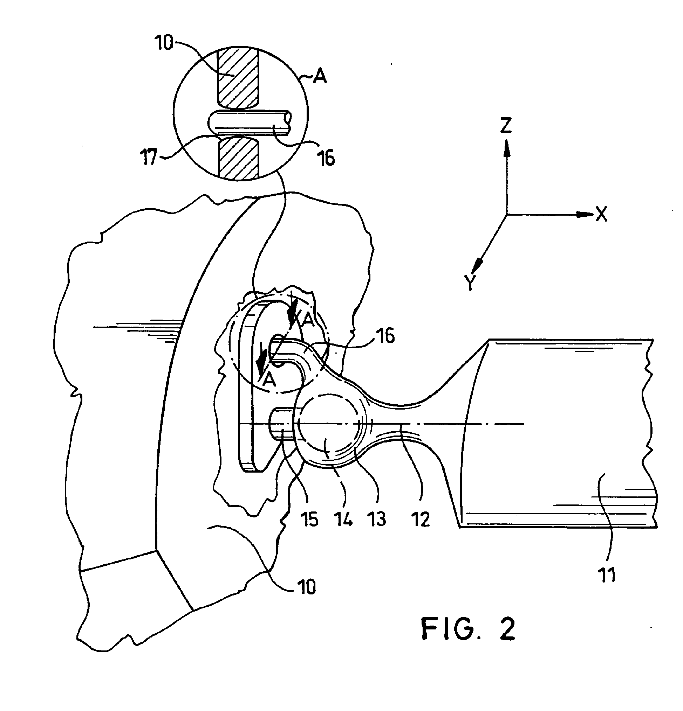

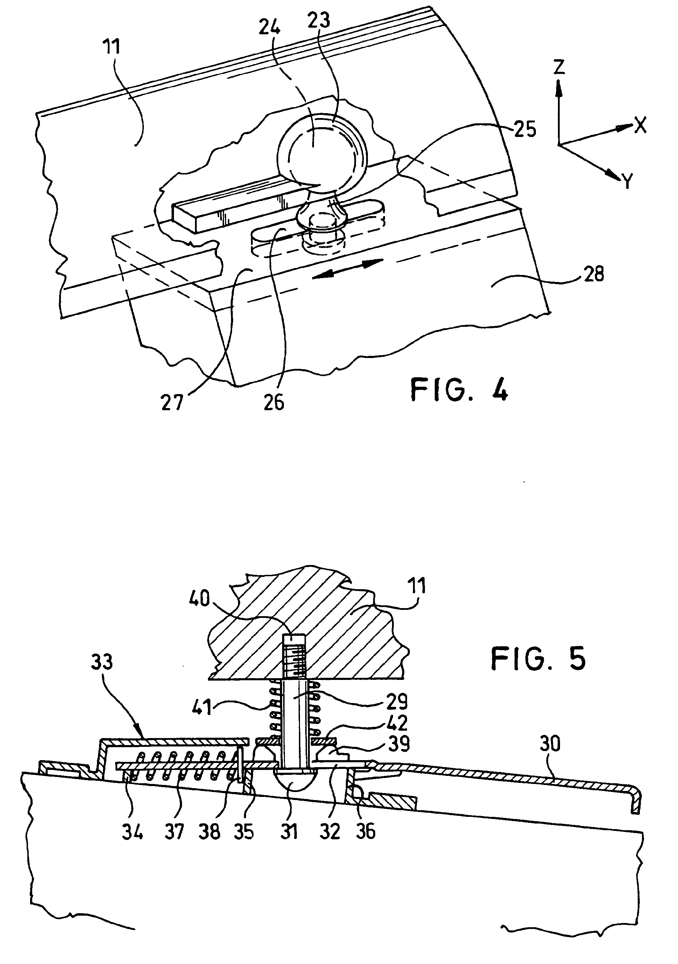

In Fig. 2 ist der obere Bereich einer A-Säule 10 gezeigt. Ferner ist der vordere Teil eines Seitenholms 11 dargestellt. Die Seitenholme sind erfindungsgemäß lösbar mit der A-Säule 10 und der in Fig. 2 nicht gezeigten B-Säule (siehe Fig. 4 und 5) verbunden. Alternativ zu einer Befestigung an der A-Säule ist auch eine Befestigung am vorderen Querholm (Windlauf) des Fahrzeugs möglich. Die Längsachse des Seitenholms 11 ist mit der Bezugsziffer 12 bezeichnet. Dargestellt von dem Seitenholm 11 ist lediglich dessen Tragstruktur; d.h. die Verkleidung des Seitenholms ist nicht dargestellt.

Das vordere Ende der inneren Tragstruktur des Seitenholms 11 ist verjüngt ausgebildet und integral mit einem Bestandteil eines Kugelgelenks verbunden, nämlich in der dargestellten Ausführungsform mit der Kugelschale 13 dieses Gelenks. Das mit der Kugelschale 13 zusammenwirkende Element des Kugellagers, die Kugel 14 ist fest mit der A-Säule 10 verbunden, von welcher die Kugel 14 in Richtung auf den Seitenholm 11 vorsteht. Zur Verbindung mit der A-Säule 10 ist die Kugel 14 integral mit einem radial von ihr vorstehenden Zapfen 15 gebildet. Auftrennbar ist das Kugelgelenk durch Abziehen der Kugelschale 13 und damit des Seitenholms 11 von der Kugel 14.

Das Kugelgelenk selbst ermöglicht an sich Drehungen des Seitenholms 11, lediglich beschränkt durch den Zapfen 15 in zahlreichen Raumrichtungen. Eine derartige freie Drehbarkeit ist jedoch vorliegend nicht erforderlich und nicht erwünscht. Vielmehr reicht es aus, wie nachfolgend noch näher erläutert, den Seitenholm 11 quer zu seiner Längsachse 12 im beschränkten Umfang auf und ab verschwenken zu können, um das andere Seitenholmende aus dem nachfolgend näher erläuterten Arretiermechanismus freizugeben bzw. dort zu verrasten. Andererseits soll der Seitenholm 11 im Bereich seiner vorderen Stecklagerung in bezug auf seine Längsachse 12 drehfest positioniert sein, um seine Funktion als Dachbestandteil zu erfüllen. Um diese Ziele zu erreichen, ist eine Dreharretierung für das Kugelgelenk vorgesehen. Diese Dreharretierung umfaßt einen weiteren Zapfen 16, der vorzugsweise integral mit der Kugelschale 13 gebildet ist und mit seinem Vorderende, das in etwa parallel zu dem integral mit der Kugel 14 gebildeten Zapfen 15 verläuft, dazu bestimmt ist, in eine Vertiefung 17 einzugreifen, die in der A-Säule bzw. an einem dort angebrachten Beschlag gebildet ist, wie aus der Einzelheitdarstellung A in Fig. 2 hervorgeht, die mit einem Kreis umschlossen ist und eine Schnittdarstellung entlang der Linie A-A darstellt.

Um zu verhindern, daß in den in seinem vorderen Schwenklager sitzenden Seitenholm 11 Biegemomente eingeleitet werden, ist bei der in Fig. 1 dargestellten Ausführungsform vorgesehen, daß das andere Ende des Seitenholms 11, nämlich das hintenliegende Ende des Seitenholms 11 gegenüber der B-Säule unter Spiel gelagert ist, wie nachfolgend in Fig. 4 und 5 gezeigt und näher erläutert.

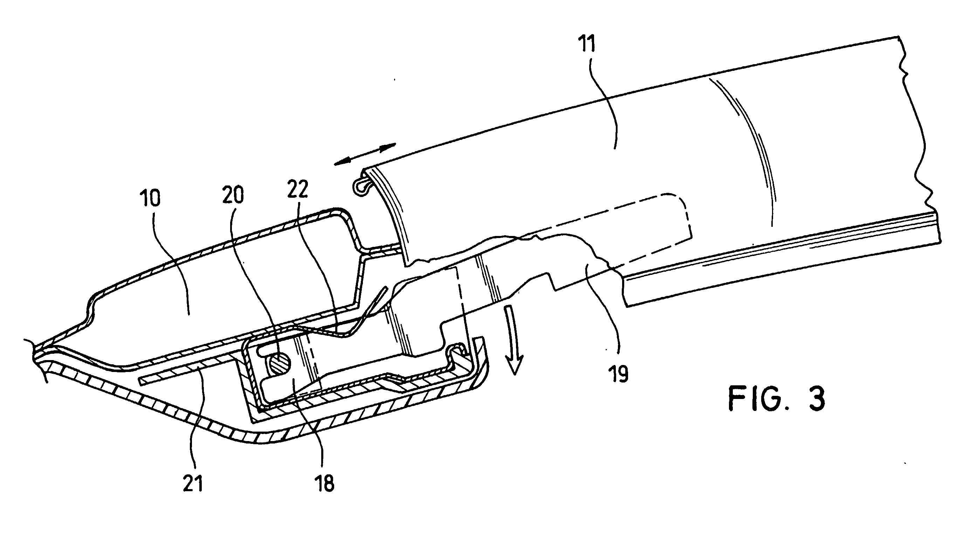

Eine Alternative zu dem in Fig. 2 gezeigten Stecklager ist in Fig. 3 gezeigt. Auch bei dieser Ausführungsform ist das Stecklager am vorderen Ende des Seitenholms 11 und an der A-Säule 10 bzw. am vorderen Querholm (Windlauf) gebildet. Dieses Stecklager basiert auf einer Schwenkverbindung mit Schwenkachse und einer diese mit Spiel übergreifenden, federbelasteten Klaue. Die Klaue 18 ist bei der in Fig. 3 gezeigten Ausgestaltung dieses Stecklagers am Vorderende des Seitenholms 11 angeordnet, nämlich als nach vorne offenes gabelförmiges Vorderende eines Flanschansatzes 19 des Seitenholms 11. Dementsprechend ist die Schwenkachse 20 fest mit der A-Säule 10 verbunden. Ebenfalls fest mit der A-Säule 10 bzw. dem vorderen Querholm verbunden ist ein Stützrahmen 21, der zum einen die Anordnung aus Flanschansatz 19 mit Klaue 18 am Seitenholm 11 vorne, unten und in Fig. 3 nicht gezeigt, seitlich begrenzt und zum anderen zusammen mit einem gegenüberliegenden Bereich der A-Säule 10 ein Widerlager für eine Feder 22 bildet. Die Feder 22 ist als Blattfeder gebildet und an die Kontur der Innenseite des Stützrahmens 21 und der Innenseite der im Stützrahmenbereich liegenden A-Säule 10 angepaßt, mit einem Ende am Boden des Stützrahmens 21 festgelegt und springt mit dem anderen Ende ausgehend von der A-Säule 10 nach hinten in Anlage gegen den Flanschansatz 19 vor, um diesen nach gegen die Schwenkachse 20 sowie in Abwärtsrichtung vorzuspannen. Durch diese Maßnahme wird erreicht, daß der Seitenholm 11 über seinen Flanschansatz 19 und die Klaue 18 federnd im Sitz auf der Schwenkachse 20 gehalten ist. Dadurch wird Spiel ausgeglichen, das zwischen der Klaue 18 und der Schwenkachse 20 vorgesehen ist, um zu verhindern, daß in den Seitenholm 11 Biegemomente über die Karosserie eingeleitet werden. Andererseits erlaubt die elastische Halterung des Seitenholms 11 mittels der Feder 22 ein problemloses Lösen des durch diese bereitgestellten Rasteingriffs, wenn der Seitenholm 11 nach hinten bei geringer Kippung nach oben aus dem Stecklager herausgezogen wird.

Fig. 4 zeigt eine bevorzugte Ausführungsform der Rastarretierung für den Seitenholm 11, dessen Vorderende an der A-Säule 10 steckgelagert ist und dessen Hinterende mittels der Rastarretierung an der B-Säule lösbar festsetzbar und dort verriegelbar ist. Die Rastarretierung umfaßt ein Rastglied in Gestalt einer Kugelkopfverbindung mit einer Kugelschale 23, die fest mit dem Seitenholm 11 bzw. einem Flanschansatz desselben verbunden ist, und eine Kugel 24, die über einen integral mit ihr gebildeten Zapfen 25 in einem Schlitz 26 verschiebbar geführt ist, der in einer Tragplatte 27 auf der Oberseite der B-Säule 28 der Fahrzeugkarosserie gebildet ist. Der Schlitz 26 verläuft parallel zur Seitenholm-Längsachse 12 (siehe Fig. 2) und erlaubt damit eine Verschiebung des Zapfens 25 und damit der Kugel 24 des Kugelgelenks in dieser Richtung, wie in Fig. 4 durch einen Doppelpfeil verdeutlicht.

Diese Rastarretierung erlaubt zum einen ein problemloses Lösen bzw. Montieren des Seitenholms 11 mit seinem Hinterende an der B-Säule 28 und stellt andererseits das benötigte Spiel für die erfindungsgemäße schwimmende Lagerung des Seitenholms 11 gegenüber der Fahrzeugkarosserie ohne Einleitung von Biegemomenten in den Seitenholm 11 im Bereich der B-Säule 28 bereit.

Eine Alternative zu der in Fig. 4 gezeigten Rastarretierung ist in Fig. 5 dargestellt. Dort ist ein Rastglied in Gestalt eines Bolzens 29 am hinteren Ende des Seitenholms 11 vorgesehen, der mit einem lösbaren Arretierglied zusammenwirkt, das an der Oberseite der B-Säule 28 angeordnet ist und einen Sperrschieber 30 mit Eingriffloch 32 für den Bolzenkopf 31 des Bolzens 29 aufweist. Der Sperrschieber 30 erstreckt sich parallel zur Seitenholm-Längsachse 12 (siehe Fig. 2) und ist in einem Führungsrahmen 33 längs verschiebbar geführt, der fest mit der B-Säule 28 verbunden ist. Das vordere in Vorwärtsrichtung rampenartig abfallend ausgebildete Ende des Sperrschiebers 30 liegt mit seiner Unterseite auf in Längsrichtung beabstandeten Stegen 34, 35 und 36 auf, die einen Teil des Führungsrahmens 33 bilden und mit ihren Oberkanten eine nach vorn abfallende Rampe zur Führung des Sperrschiebers 30 festlegen. Der Sperrschieber 30 ist in seinem vorderen Bereich von einer Druckfeder 37 umgeben, die sich mit einem Ende am Führungsrahmen 33 und mit dem gegenüberliegenden Ende an einem sperrschieberfesten Anschlag 38 abstützt, der bei sich in Sperrstellung befindlichem Sperrschieber 30 am mittleren Steg 35 anliegt, wie in Fig. 5 gezeigt.

In dieser Stellung des Sperrschiebers 30 durchsetzt der Bolzen 29 mit seinem Bolzenkopf 31 das Eingriffloch 32 des Sperrschiebers 30 und hintergreift den Sperrschieber 30 im Bereich des Eingrifflochs 32 mit dem Ringrand an der Unterseite des Bolzenkopfs 31 im Übergangsbereich des Bolzenkopfs 31 zum Bolzen 29. Wie aus Fig. 5 hervorgeht, erfolgt der Eingriff zwischen der Unterseite des Bolzenkopfs 31 und dem Sperrschieber 30 am vorderen Randbereich des Eingrifflochs 32, das als Längsloch mit Längserstreckung parallel zu der Seitenholm-Längsachse 12 gebildet ist, um einerseits das für die schwimmende Lagerung des Seitenholms 11 erforderliche Spiel in Längsrichtung bereitzustellen, und um andererseits den Bolzenkopf 31 durch Verstellung des Sperrschiebers 30 freigeben zu können. Zu diesem Zweck wird der Sperrschieber 30 aus der in Fig. 5 gezeigten Arretierposition nach vorne geschoben, so daß der Bolzenkopf 31 vom vorderen Rand des Eingrifflochs 32 freikommt, und nachfolgend der Seitenholm 11 aufwärts verschwenkt werden kann.

Um den Bolzenkopf 31 sicher in Eingriff in das Eingriffloch 32 bringen zu können, und zwar ungeachtet von gegebenenfalls auf die Karosserie einwirkenden Verwindungskräften, ist eine fest mit der B-Säule 28 bzw. mit dem Führungsrahmen 33 verbundene Bolzenkopfführung 39 vorgesehen, die aus einem Blechteil besteht, das in Gestalt eines zentral offenen Führungstrichters gebildet ist, der sich in Abwärtsrichtung zum Eingriffloch 32 hin verjüngt.

Ferner ist vorgesehen, daß der Seitenholm 11 bei freigegebenem Bolzen 29 eine erkennbare angehobene Lage einnimmt. Zu diesem Zweck ist der Bolzen 29, der fest mit dem Seitenholm 11 verbunden ist (beispielsweise in eine Aufnahmebohrung 40 desselben geschraubt), von einer Druckfeder 41 umgeben, die mit einem Ende fest mit dem Seitenholm 11 verbunden ist und am anderen Ende eine Druckscheibe 42 beaufschlagt, die dazu bestimmt ist, bei in das Eingriffloch 32 eingreifendem Bolzenkopf 31 mit ihrer Unterseite federvorgespannt am Rand der Bolzenkopfführung 39 anzuliegen. In diesem Zustand ist die Druckfeder 41 zusammengedrückt. Sobald der Bolzenkopf 31 bei entsprechender Entriegelungsbetätigung des Sperrschiebers 30 aus dem Eingriffloch 32 freikommt, entspannt sich die Druckfeder 41 bei weiterhin auf der Oberseite der Bolzenkopfführung 39 anliegender Druckscheibe 42, so daß der Seitenholm 11 durch die Federkraft sichtbar aus seiner Verriegelungsposition angehoben wird.

Sämtliche vorstehend erläuterten Organe des Stecklagers am Vorderende des Seitenholms und der Rastarretierung am Hinterende des Seitenholms können grundsätzlich auch am jeweils anderen Teil angeordnet sein. Beispielsweise kann der Bolzen der Rastarretierung anstatt am Seitenholm auch an der B-Säule vorgesehen sein und der Rastschieber und seine zugeordnete Teile können am Seitenholm angeordnet sein. Ferner können umgekehrt wie bei den vorstehend erläuterten Ausführungsformen das Stecklager an der hinten liegenden B-Säule und die Rastarretierung an der vorne liegenden A-Säule angeordnet sein. Anstelle der A-Säulen oder der B-Säulen können auch andere fahrzeugfeste Teile verwendet werden.

### Bezugszeichenliste

- 1: Fahrzeug
- 2: Windlauf
- 3: öffnungsfähiges Dachteil (Faltdach)
- 4: Dachkasette
- 10: A-Säule
- 11: Seitenholm
- 12: Seitenholm-Längsachse
- 13: Kugelschale
- 14: Kugel
- 15: Zapfen
- 16: Zapfen
- 17: Vertiefung
- 18: Klaue
- 19: Flanschansatz
- 20: Schwenkachse
- 21: Stützrahmen
- 22: Feder
- 23: Kugelschale
- 24: Kugel
- 25: Zapfen
- 26: Schlitz
- 27: Tragplatte
- 28: B-Säule
- 29: Bolzen
- 30: Sperrschieber
- 31: Bolzenkopf
- 32: Eingriffloch
- 33: Führungsrahmen
- 34: Steg
- 35: Steg
- 36: Steg
- 37: Druckfeder
- 38: Anschlag
- 39: Bolzenkopfführung
- 40: Aufnahmebohrung
- 41: Druckfeder
- 42: Druckscheibe

## Patentansprüche

1. Fahrzeug-Dachstruktur mit wenigstens einem Dachteil (3), das im Bereich von Seitenholmen (11) verschiebbar geführt ist, wobei die Seitenholme (11) mit fahrzeugfesten Teilen, wie der A-Säule (10) und der B-Säule (28) der Fahrzeugkarosserie durch einen Steck- und Arretiermechanismus lösbar verbunden sind, **dadurch gekennzeichnet, dass** der Steck- und Arretierungsmechanismus eine Entkopplung der Seitenholme (11) von der A-Säule (10) und der B-Säule (28) im Sinne einer schwimmenden Lagerung der Seitenholme (11) ohne Einleitung von Biegemomenten in die Seitenholme (11) vorsieht.

2. Dachstruktur nach Anspruch 1, **dadurch gekennzeichnet, dass** eine der Säulen, die A-Säule (10) bzw. die B-Säule (28), Stecklager für ein Ende der Seitenholme (11) und die andere der Säulen Rastarretierungen für das andere Ende der Seitenholme (11) aufweist.

3. Dachstruktur nach Anspruch 2, **dadurch gekennzeichnet, dass** die Stecklager und/oder die Rastarretierungen axiales Spiel für die Seitenholme (11) zulassen.

4. Dachstruktur nach Anspruch 2 oder 3, **dadurch gekennzeichnet, dass** das jeweilige Stecklager eine in Bezug auf die Seitenholm-Längsachse (12) drehfeste Aufnahme des einen Seitenholmendes bildet und bei gelöster Rastarretierung des anderen Seitenholmendes eine Verschwenkung des jeweiligen Seitenholms (11) quer zur Seitenholm-Längsachse (12) zulässt.

5. Dachstruktur nach Anspruch 4, **dadurch gekennzeichnet, dass** das Stecklager eine Kugelkopfverbindung (13, 14) zwischen Säule und Seitenholmende und eine Dreharretierung für die Kugelkopfverbindung aufweist.

6. Dachstruktur nach Anspruch 5, **dadurch gekennzeichnet, dass** die Dreharretierung einen in eine Vertiefung (17) eingreifenden Zapfen (15 bzw. 16) aufweist.

7. Dachstruktur nach Anspruch 4, **dadurch gekennzeichnet, dass** das Stecklager eine Schwenkverbindung mit einer Schwenkachse (20) quer zum Seitenholm (11) und einer diese mit Spiel übergreifende Klaue (18) aufweist

8. Dachstruktur nach Anspruch 7, **dadurch gekennzeichnet, dass** die Klaue (18) mittels Federkraft gegen die Schwenkachse (20) gedrückt ist.

9. Dachstruktur nach einem der Ansprüche 2 bis 8, **dadurch gekennzeichnet, dass** die Rastarretierung ein Rastglied und ein dieses lösbar festsetzendes Arretierglied aufweist.

10. Dachstruktur nach Anspruch 9, **dadurch gekennzeichnet, dass** das Rastglied eine in Längsrichtung des Seitenholms (11) verschiebbar gelagerte Kugelkopfverbindung (23; 24) aufweist.

11. Dachstruktur nach Anspruch 9, **dadurch gekennzeichnet, dass** das Rastglied einen Bolzen (29) aufweist, der eine Zentrieröffnung in einem das Arretierglied bildenden Schlossteil unter Spiel und Federvorspannung hintergreift.

12. Dachstruktur nach Anspruch 11, **dadurch gekennzeichnet, dass** das Schlossteil Bestandteil eines unter Federvorspannung in Verriegelungsstellung vorgespannten und in Bolzen-Freigabestellung entgegen der Federvorspannung verschiebbaren Arretier-Sperrschiebers (30) ist.

## Claims

1. Vehicle roof structure having at least one roof part (3) which is guided such that it can be displaced in the region of side members (11), the side members (11) being detachably connected to parts fixed to the vehicle, such as the A pillar (10) and the B pillar (28) of the vehicle body, by means of a plug-in and locking mechanism, **characterized in that** the plug-in and locking mechanism provides for the side members (11) to be decoupled from the A pillar (10) and the B pillar (28) with the effect of a floating mounting of the side members (11) without introducing bending moments into the side members (11).

2. Roof structure according to Claim 1, **characterized in that** one of the pillars, the A pillar (10) or the B pillar (28), has plug-in mountings for one end of the side members (11), and the other of the pillars has catches for the other end of the side members (11).

3. Roof structure according to Claim 2, **characterized in that** the plug-in mountings and/or the catches permit axial play for the side members (11).

4. Roof structure according to Claim 2 or 3, **characterized in that** the respective plug-in mounting forms a holder for the one side member end which is fixed against rotation in relation to the side member longitudinal axis (12) and, when the catch of the other side member end is released, permits the respective side member (11) to be pivoted transversely with respect to the side member longitudinal axis (12).

5. Roof structure according to Claim 4, **characterized in that** the plug-in mounting has a ball head connection (13; 14) between pillar and side member end and a rotary lock for the ball head connection.

6. Roof structure according to Claim 5, **characterized in that** the rotary lock has a pin (15 or 16) engaging in a depression (17).

7. Roof structure according to Claim 4, **characterized in that** the plug-in mounting has a pivoting connection with a pivot (20) extending transversely with respect to the side member (11) and a claw (18) engaging over the said pivot with play.

8. Roof structure according to Claim 7, **characterized in that** the claw (18) is pressed against the pivot (20) by means of spring force.

9. Roof structure according to one of Claims 2 to 8, **characterized in that** the catch has a latching element and a locking element fixing the latter such that it can be released.

10. Roof structure according to Claim 9, **characterized in that** the latching element has a ball head connection (23; 24) mounted such that it can be displaced in the longitudinal direction of the side member (11).

11. Roof structure according to Claim 9, **characterized in that** the latching element has a pin (29) which engages with play and under spring prestress in a centring opening in a lock part forming the locking element.

12. Roof structure according to Claim 11, **characterized in that** the lock part is a constituent part of a locking and blocking slide (30) which is prestressed into the locked position under spring prestress and can be displaced into the pin release position counter to the spring prestress.

## Revendications

1. Structure de toit de véhicule, avec au moins une partie de toit (3) qui est guidée en déplacement dans la région de longerons de toit (11), sachant que les longerons de toit (11) sont reliés de manière détachable par un mécanisme d'emboîtement et de blocage à des éléments solidaires du véhicule comme le montant A (10) et le montant B (28) de la carrosserie du véhicule, **caractérisée en ce que** le mécanisme d'emboîtement et de blocage prévoit que les longerons de toit (11) sont désaccouplés du montant A (10) et du montant B (28) en ce sens qu'il est prévu un montage flottant des longerons de toit (11) sans introduction de couples de flexion dans les longerons de toit (11).

2. Structure de toit selon la revendication 1, **caractérisée en ce qu'**un des montants, le montant A (10) ou le montant B (28), présente des paliers d'emboîtement pour une première extrémité des longerons de toit (11), et l'autre des montants présente des moyens de blocage par enclenchement pour l'autre extrémité des longerons de toit (11).

3. Structure de toit selon la revendication 2, **caractérisée en ce que** les paliers d'emboîtement et/ou les moyens de blocage par enclenchement autorisent un jeu axial pour les longerons de toit (11).

4. Structure de toit selon la revendication 2 ou 3, **caractérisée en ce que** le palier d'emboîtement respectif reçoit ladite première extrémité du longeron de toit avec blocage en rotation relativement à l'axe longitudinal (12) du longeron de toit et il autorise, lorsque le blocage par enclenchement de l'autre extrémité du longeron de toit est libéré, un pivotement du longeron de toit respectif (11) transversalement à l'axe longitudinal (12) du longeron de toit.

5. Structure de toit selon la revendication 4, **caractérisée en ce que** le palier d'emboîtement présente une liaison à boule (13 ; 14) entre le montant et l'extrémité du longeron de toit, et un moyen de blocage en rotation pour la liaison à boule.

6. Structure de toit selon la revendication 5, **caractérisée en ce que** le moyen de blocage en rotation présente un tenon (15 ou 16) s'engageant dans un renfoncement (17).

7. Structure de toit selon la revendication 4, **caractérisée en ce que** le palier d'emboîtement présente une liaison pivotante avec un axe de pivotement (20) transversal au longeron de toit (11) et une mâchoire (18) engageant cet axe en recouvrement avec jeu.

8. Structure de toit selon la revendication 7, **caractérisée en ce que** la mâchoire (18) est pressée par force de ressort contre l'axe de pivotement (20).

9. Structure de toit selon l'une des revendications 2 à 8, **caractérisée en ce que** le moyen de blocage par enclenchement présente un organe d'enclenchement et un organe de blocage qui l'immobilise de manière libérable.

10. Structure de toit selon la revendication 9, **caractérisée en ce que** l'organe d'enclenchement présente une liaison à boule (23 ; 24) montée à déplacement dans la direction longitudinale du longeron de toit (11).

11. Structure de toit selon la revendication 9, **caractérisée en ce que** l'organe d'enclenchement présente un boulon (29) qui s'engage par l'arrière, avec jeu et précontrainte de ressort, dans une ouverture de centrage prévue dans un élément de verrouillage qui constitue l'organe de blocage.

12. Structure de toit selon la revendication 11, **caractérisée en ce que** l'élément de verrouillage fait partie d'un coulisseau de blocage (30) qui est précontraint par précontrainte de ressort en position de verrouillage et qui peut être déplacé à l'encontre de la précontrainte de ressort en position de libération du boulon.
